# FASCICULE DE BREVET EUROPEEN

(11) **EP 1 677 020 B1**
(45) Date de publication et mention de la délivrance du brevet: **03.10.2007**
(21) Numéro de dépôt: 05301032.8
(22) Date de dépôt: 08.12.2005
(51) Int. Cl.: F16D 23/14, F16D 25/08

(54) **Dispositif d'embrayage à récepteur hydraulique à piston synchronise**
Hydraulische Kupplungsvorrichtung mit synchronisiertem Kolben
Hydraulic clutch with synchronised piston

(30) Priorité: 30.12.2004 FR 0414052
(43) Date de publication de la demande: 05.07.2006
(73) Titulaire: RENAULT S.A.S., 92100 Boulogne Billancourt (FR)
(72) Inventeur: Chouchana, Richard, 92220 Bagneux (FR)
(74) Mandataire: Rougemont, Bernard

(56) Documents cités:
- DE-A1- 10 114 844
- GB-A- 1 548 624
- US-A- 3 722 643
- US-A- 3 948 371

## Description

La présente invention se rapporte au domaine de l'embrayage et à la commande d'un embrayage de véhicule automobile.

L'invention se rapporte plus particulièrement aux embrayages à commandes hydrauliques concentriques.

Un problème général dans ce domaine concerne les perturbations acoustiques engendrées par le crissement de butée de l'embrayage. Ce désagrément est la conséquence d'une vitesse différentielle entre les becs de diaphragmes de l'embrayage et la butée de l'embrayage. Cette vitesse différentielle engendre une mise en résonance de la cinématique de l'embrayage à basse température. La forme en haut-parleur des becs de diaphragme amplifie le phénomène.

Il est connu dans l'art antérieur des solutions qui consistent à augmenter l'effort de tarage du ressort de précharge de récepteur pour mieux plaquer le roulement de la butée d'embrayage sur les becs de diaphragme de l'embrayage.

Cependant, cette solution engendre souvent la nécessité d'augmenter le tarage du diaphragme de l'embrayage pour éviter un délestage du plateau de pression. De fait, ceci entraîne automatiquement une augmentation de l'effort pédale, conséquence gênante pour le client utilisateur.

Il est connu également des dispositifs d'embrayage concentrique à commande hydraulique comprenant un piston monté autour de l'axe de la boîte de vitesse appelé arbre primaire afin de commander l'embrayage. Comme indiqué dans la demande de brevet US 5810145, une bague tournante montée sur un roulement est attachée à l'extrémité du piston pour entrer en contact avec les becs de diaphragme. Même si la bague et les becs une fois le contact établis ont la même vitesse, il peut exister au moment du contact une vitesse différentielle entre les becs du diaphragme et la bague de butée d'embrayage qui provoque un « crissement ».

Par ailleurs, il est également connu de monter un roulement sur les becs de diaphragme mais pour des embrayages commandés mécaniquement par traction à l'aide d'une fourche sur la bague extérieure du roulement. La bague du roulement permet la liaison d'une part entre la fourche fixe en rotation mobile en translation et d'autre part les becs mobiles en translation et en rotation.

La présente invention a pour but de pallier certains inconvénients de l'art antérieur en proposant un dispositif d'embrayage évitant tout glissement des becs de diaphragme sur la butée de l'embrayage commandé par un récepteur hydraulique.

Ce but est atteint par un dispositif de commande pour becs de diaphragmes d'embrayage hydraulique concentrique agissant sur un ressort diaphragme comprenant des doigts radiaux dont les extrémités forment les becs de diaphragme, caractérisé en ce que le dispositif comprend un roulement rendu solidaire par sa bague extérieure des becs de diaphragme, une bague intérieure étant solidaire en rotation d'un manchon synchronisateur coaxiale à l'arbre primaire et montée sur la bague intérieure par des moyens permettant un déplacement radial relatif du manchon par rapport à la bague intérieure facilitant un autocentrage du manchon synchronisateur.

Selon une autre particularité le manchon synchronisateur est rendu solidaire de la bague intérieure du roulement pour permettre la liaison avec une bague de synchronisateur de piston montée fixe en rotation sur un piston hydraulique concentrique à l'arbre primaire le piston commandant le déplacement en translation des becs de diaphragme.

Selon une autre particularité une rondelle de précharge et un clip assurent la liaison en rotation des becs de diaphragme avec un manchon solidaire de la bague extérieure du roulement.

Selon une autre particularité la bague intérieure comporte un prolongement en forme de disque radial et de couronne axiale cette dernière formant un épaulement pour assurer la liaison avec un capot de maintien du manchon synchronisateur sur la bague intérieure du roulement.

Selon une autre particularité le moyen de maintien du manchon synchronisateur sur la bague intérieure du roulement comprend un capot de maintien et une rondelle d'autocentrage du manchon appuyant sur un collet du manchon synchronisateur et le capot de maintien.

Selon une autre particularité une butée axiale est montée et maintenue solidairement au manchon synchronisateur sur son extrémité faisant face au piston.

Selon une autre particularité la bague extérieure du roulement comporte un prolongement radial et axial par rapport à l'axe du roulement formant un épaulement permettant de monter et de maintenir les becs de diaphragme solidairement en rotation sur la bague extérieure de roulement.

Selon une autre particularité la surface de contact entre le manchon synchronisateur et la bague de synchronisateur piston est de géométrie conique.

Selon une autre particularité l'angle et les matériaux composant la surface de contact du manchon synchronisateur et la surface de contact de la bague synchronisateur piston sont choisis pour limiter les glissements.

Selon une autre particularité le corps de récepteur hydraulique est positionné de telle sorte que la bague synchronisateur piston est en permanence en contact avec le manchon synchronisateur.

Selon une autre particularité le capot de maintien du manchon synchronisateur comporte des moyens de montage du manchon synchronisateur sur la bague intérieure du roulement et le manchon synchronisateur comporte des moyens permettant le montage et la liaison en rotation avec le capot de maintien.

Selon une autre particularité le dispositif selon un mode de réalisation de l'invention est utilisé sur un embrayage comprenant un piston guidé axialement et de façon concentrique à l'arbre primaire de la boite de vitesse par une chambre hydraulique montée fixe en rotation dans le carter d'embrayage du côté d'introduction de l'arbre primaire, le déplacement du piston en translation commandant le ressort de diaphragme qui agit sur une couronne mobile en translation pour plaquer une garniture contre le volant moteur ; la garniture étant liée en rotation avec l'arbre primaire de la boite de vitesse.

D'autres particularités et avantages de la présente invention apparaîtront plus clairement à la lecture de la description ci-après, faite en référence aux dessins annexés, dans lesquels :
- la figure 1 représente une vue (sans échelle) du récepteur hydraulique en position débrayé selon l'invention.
- la figure 2 représente une vue (sans échelle) du récepteur hydraulique selon l'invention comme à la figure 2 dans laquelle le manchon synchronisateur est séparé du synchronisateur de piston afin de pouvoir les distinguer visuellement.
- la figure 3 représente une vue en coupe d'une cloche d'embrayage, selon l'art antérieur avec un récepteur concentrique hydraulique en position débrayé dans la moitié supérieure à l'axe de la figure 1 et en position embrayé dans la moitié inférieure à l'axe de la figure 1.

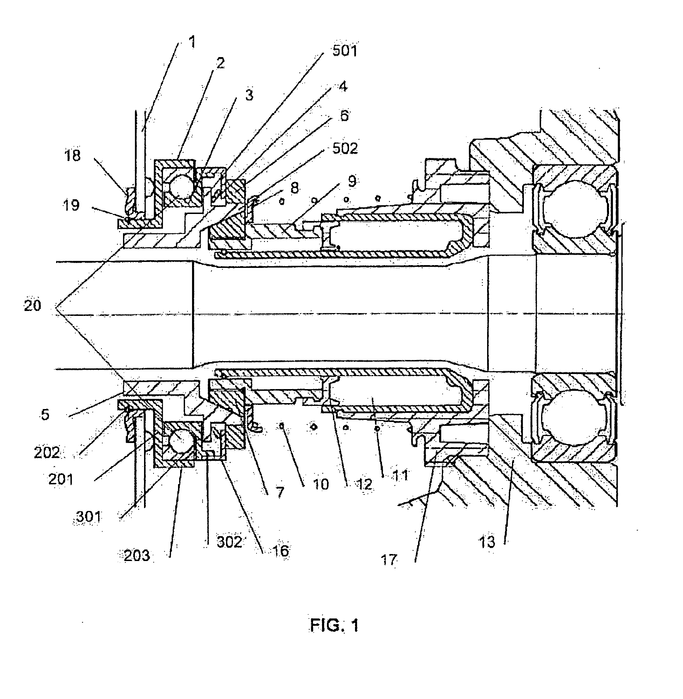

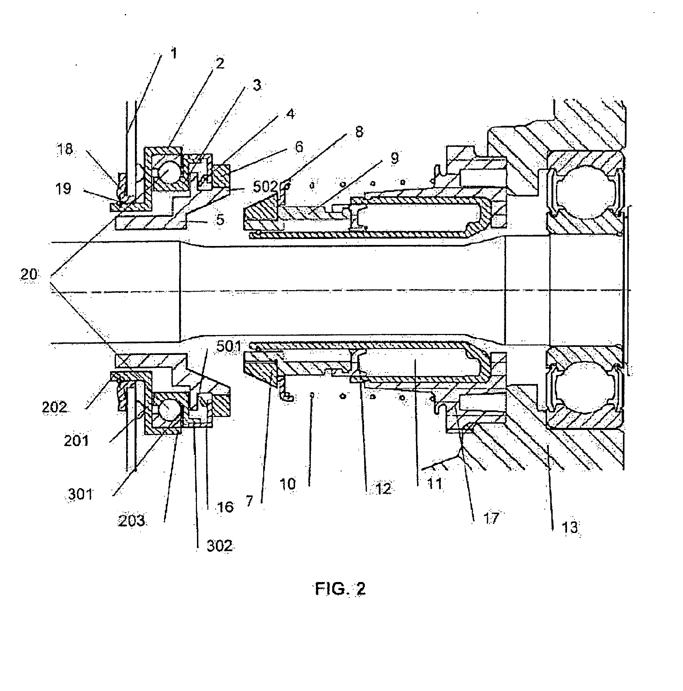

En référence à la figure 1 et 2, le dispositif d'embrayage hydraulique concentrique selon l'invention est composé d'une partie butée comprenant un piston (9) sur laquelle est montée à son extrémité une bague de synchronisateur de piston (7) de forme tronconique maintenue solidairement en rotation au corps du piston (9) par exemple par vissage, adhésion chimique ou thermique. Le piston (9) est actionné dans un déplacement axial par la chambre hydraulique (11) dans laquelle le piston (9) coulisse. Un joint (12) assurant l'étanchéité de la chambre hydraulique (11) est disposé sur l'extrémité du piston (9) apposée à celle de la bague (7) et qui s'insère dans la chambre hydraulique (11). Ainsi, lorsque le fluide est injecté dans la chambre hydraulique (11) le piston (9) pousse le manchon synchronisateur (5). Un ressort de précharge (10) exerce une force en permanence sur le piston en poussant le piston (9) vers un manchon synchronisateur (5). Le piston (9) est fixe en rotation comme la chambre hydraulique (11), et monté solidairement du corps récepteur hydraulique (17) et d'un carter d'embrayage (13).

Le volume annulaire formant les parois de la chambre hydraulique (11) est maintenu par ses parois externes sur le corps de récepteur hydraulique (17) lequel est lui-même rendu solidaire du carter d'embrayage (13), par exemple par vissage.

Le ressort de précharge (10) est maintenu par une de ses extrémités au moyen d'un socle de guidage (8) du ressort de précharge et par son autre extrémité contre un épaulement du corps de récepteur hydraulique (17).

Lors du débrayage, le fluide de commande augmente le volume de la chambre hydraulique (11) en poussant le piston (9) qui comporte à son extrémité la bague (7) de synchronisateur de piston qui vient se centrer et s'accoupler selon l'invention sur le manchon synchronisateur (5) porté par les becs.

Le dispositif selon l'invention est composé d'une autre partie liée aux becs comprenant un manchon synchronisateur (5) auquel vient s'accoupler la bague (7) de synchronisateur de piston. Le manchon synchronisateur (5) est monté solidaire en rotation de la bague intérieure (3) d'un roulement (20) et de façon à pouvoir s'autocentrer par rapport à la bague (7) de synchronisateur de piston. Un exemple de réalisation ayant cette fonction autocentrante est donné ci-après sans que celui ci soit considéré comme limitatif.

La bague intérieure (3) comporte un prolongement radial (301) et axial (302) par rapport à l'axe du roulement (20) formant un épaulement permettant de monter et maintenir par serrage, clipsage ou serrage un capot de maintien (16) du manchon synchronisateur (5) sur la bague intérieure (3) du roulement (20).

Le manchon synchronisateur (5) comporte un collet (501) permettant son maintien dans son logement annulaire formé par le capot (16) et le prolongement radial (301) et axial (302) de la bague intérieure (3).

Une butée axiale (6) est montée et maintenue solidairement sur l'extrémité cylindrique (502) du manchon synchronisateur. La butée axiale (6) vient buter axialement sur le capot de maintien (16).

Une rondelle élastique d'autocentrage (4) est disposée entre le capot de maintien (16) et l'épaulement formé par le collet (501) du manchon synchronisateur (5) pour permettre d'autocentrer le manchon synchronisateur (5) par rapport à la bague (7) synchronisateur de piston.

Le capot de maintien (16) vient s'insérer entre la rondelle d'autocentrage (4) maintenue par le collet (501), et la butée axiale (6) pour maintenir solidairement en rotation le manchon synchronisateur (5) avec la bague intérieure (3) du roulement (20).

La bague intérieure (3) du roulement (20), le capot de maintien du manchon synchronisateur (16), le manchon synchronisateur (5) et la butée axiale du manchon synchronisateur (6) sont donc tous solidaires en rotation.

Le capot de maintien (16) permet également le montage du manchon synchronisateur (5) sur la bague intérieure de roulement (3). En effet après avoir réalisé le montage de la rondelle élastique sur le collet (501) le capot est monté par la partie cylindrique externe (502) du manchon synchronisateur (5) et la bague de butée axiale (6) est rendue solidaire du manchon synchronisateur (5).

D'autres variantes de réalisation sont possibles. La butée (6) peut être monobloc avec le manchon (5). Dans ce cas la périphérie de la butée comporte des créneaux formant des échancrures et le flan radial du capot de maintien (16) comporte des échancrures pour former des dents capables de pénétrer dans les échancrures de la butée (6). Un décalage angulaire du capot de maintien (16) est réalisé pour mettre en vis à vis les parties pleines de la butée (6) avec celles du capot de maintien (16). L'ensemble est ensuite monté sur la bague interne (3) du roulement (20).

La bague extérieure de roulement (2) est solidarisée aux becs de diaphragme de la façon suivante. La bague extérieure (2) du roulement (20) comporte un prolongement radial (201) et axial (202) par rapport à la bague extérieure (2), du roulement (20). Le manchon axial (202) et une rondelle (18) forment un épaulement permettant de monter et maintenir les becs de diaphragmes (1) solidairement en rotation sur la bague extérieure de roulement (2). Les becs de diaphragme (1) sont maintenus solidairement en rotation sur la bague extérieure (2) de roulement au moyen d'une rondelle de précharge (18). La rondelle de précharge (18) est maintenue sur la partie (202) de la bague extérieure (2) de roulement au moyen d'un clip (19). Le volant moteur (21), les becs de diaphragme (1) et la bague extérieure de roulement (2) sont donc selon l'invention, tous solidaires en rotation.

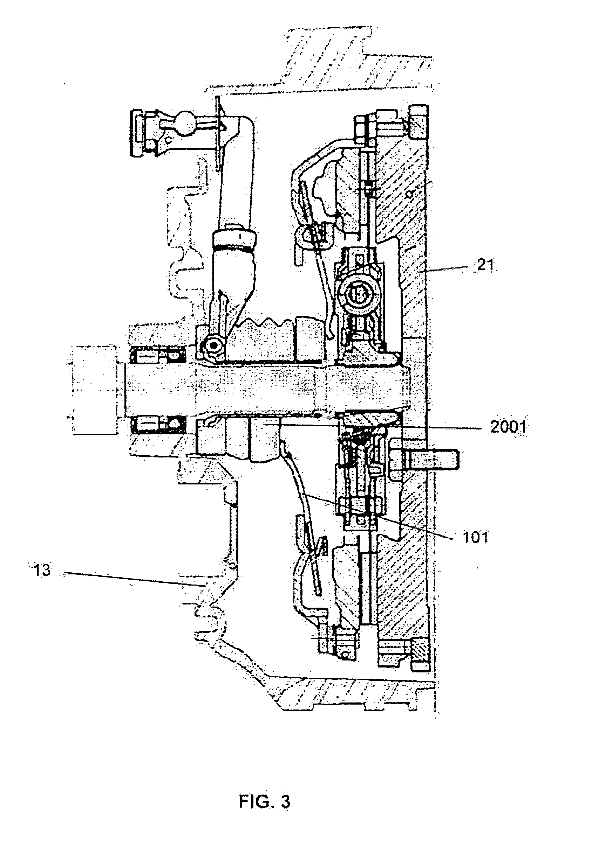

Dans l'art antérieur, figure 3, il existait le risque qu'une vitesse différentielle de rotation apparaisse entre les becs de diaphragme (101) et la bague de roulement (2001) sur laquelle s'appuyaient les becs de diaphragme (101). Cette vitesse différentielle entre les becs de diaphragme (101) de l'embrayage et la bague de roulement (2001) entraînait une perturbation acoustique connue sous le nom de « crissement de butée ».

Dans le montage selon l'invention, figure 1 et 2, il n'existe plus de vitesse différentielle entre les becs de diaphragme et la butée d'embrayage car les becs de diaphragme (1) sont maintenus solidairement en rotation sur la bague extérieure (2) du roulement (20), dont la bague interne (3) est maintenue fixe en rotation par la bague (7) synchronisateur de piston. Il n'y a donc plus de perturbation acoustique connue sous le nom de « crissement de butée ».

Dans le dispositif d'embrayage selon l'invention, le manchon synchronisateur (5) et le synchronisateur de piston (7) ne sont pas maintenus solidairement. Par conséquent, la zone où pourrait exister un tel glissement est localisée au niveau du contact entre le manchon synchronisateur (5) et le synchronisateur de piston (7).

L'avantage de déplacer cette zone de glissement entre un manchon synchronisateur (5) et un synchronisateur de piston (7) est que cette zone de risque de glissement selon l'invention est mieux maîtrisée. Les inconvénients du glissement sont donc mieux maîtrisés.

Le manchon synchronisateur (5) et le synchronisateur de piston (7) doivent assurer une bonne adhérence entre eux en ayant un couple de frottement élevé, en particulier lors du débrayage pour éviter le risque de glissement.

La bague de synchronisateur de piston (7) présente à son extrémité une forme tronconique ou chanfreinée destinée à épouser respectivement la surface intérieure de forme conique du manchon synchronisateur (5) pour améliorer l'adhérence du manchon synchronisateur (5) sur la bague de synchronisateur de piston (7).

L'angle de conicité sera déterminé pour éviter les risques de glissement en fonction du couple de matériaux choisis pour le manchon synchronisateur (5) et la bague (7) de synchronisation du piston.

Un couple de matériaux tel que acier/plastique ou plastique/acier pour respectivement le matériau composant la surface de contact du manchon synchronisateur (5) et le matériau composant la surface de contact du synchronisateur piston (7) sont avantageux pour obtenir un bon coefficient de frottement et donc une bonne adhérence du manchon synchronisateur (5) sur le synchronisateur de piston (7).

Grâce à la bonne adhérence du synchronisateur de piston (7) sur le manchon synchronisateur (5), il y a peu de risque de glissement, il est donc aussi possible de réduire le tarage du ressort de précharge ce qui permet par conséquent de réduire sensiblement le tarage de l'embrayage et l'effort à appliquer sur la pédale par l'utilisateur.

Un autre avantage de l'invention est qu'il est possible de changer le roulement et l'embrayage sans changer le CSC (Commande concentrique hydraulique).

Le corps de récepteur hydraulique (17) peut être positionné de telle sorte que le synchronisateur piston (7) touche en permanence le manchon synchronisateur (5).

L'invention s'applique à un dispositif d'embrayage comprenant un piston (9) guidé axialement et de façon concentrique à l'arbre primaire de la boite de vitesse par une chambre hydraulique (11) montée fixe en rotation dans le carter d'embrayage du côté d'introduction de l'arbre primaire, le déplacement du piston (9) en translation commandant le ressort de diaphragme qui agit sur une couronne mobile en translation pour plaquer une garniture contre le volant moteur; la garniture étant liée en rotation avec l'arbre primaire de la boite de vitesse.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de commande pour becs de diaphragme d'embrayage hydraulique concentrique agissant sur un ressort diaphragme (10) comprenant des doigts radiaux dont les extrémités forment les becs de diaphragme (1), **caractérisé en ce que** le dispositif comprend un roulement (20) rendu solidaire par sa bague extérieure (203) des becs de diaphragme (1) une bague intérieure (3) étant solidaire en rotation d'un manchon synchronisateur (5) coaxial à l'arbre primaire et montée sur la bague intérieure (3) par des moyens (16,4,501) permettant un déplacement radial relatif du manchon synchronisateur (5) par rapport à la bague intérieure facilitant un autocentrage du manchon synchronisateur.

2. Dispositif de commande pour embrayage selon la revendication 1 **caractérisé en ce que** le manchon synchronisateur (5) est rendu solidaire de la bague intérieure (3) du roulement (20) pour permettre la liaison avec une bague (7) de synchronisateur de piston montée fixe en rotation sur un piston hydraulique concentrique à l'arbre primaire le piston commandant le déplacement en translation des becs de diaphragme.

3. Dispositif de commande pour embrayage selon l'une des revendications de 1 à 2 **caractérisé en ce que** une rondelle de précharge (18) et un clip (19) assurent la liaison en rotation des becs de diaphragme (1) avec un manchon (201, 202, 203) solidaire de la bague extérieure (2) du roulement (20).

4. Dispositif de commande pour embrayage selon l'une des revendications de 2 à 3 **caractérisé en ce que** la bague intérieure (3) comporte un prolongement en forme de disque radial (301) et de couronne axiale (302) cette dernière formant un épaulement pour assurer la liaison avec un capot de maintien (16) du manchon synchronisateur (5) sur la bague intérieure (3) du roulement (20).

5. Dispositif de commande pour embrayage selon l'une des revendications de 2 à 4 **caractérisé en ce que** le moyen de maintien du manchon synchronisateur (5) sur la bague intérieure (3) du roulement (20) comprend un capot de maintien (16) et une rondelle d'autocentrage (4) du manchon synchronisateur appuyant sur un collet (501) du manchon synchronisateur (5) et le capot de maintien (16).

6. Dispositif de commande pour embrayage selon l'une des revendications de 2 à 5 **caractérisé en ce que** une butée axiale (6) est montée et maintenue solidairement au manchon synchronisateur (5) sur son extrémité faisant face au piston (9).

7. Dispositif de commande pour embrayage selon l'une des revendications de 2 à 6 **caractérisé en ce que** la bague extérieure (2) du roulement (20) comporte un prolongement radial (201) et axial (202) par rapport à l'axe du roulement (20) formant un épaulement permettant de monter et de maintenir les becs de diaphragme (1) solidairement en rotation sur la bague extérieure de roulement (2).

8. Dispositif de commande pour embrayage selon la revendication 2 **caractérisé en ce que** la surface de contact entre le manchon synchronisateur (5) et la bague (7) de synchronisateur piston est de géométrie conique.

9. Dispositif de commande pour embrayage selon la revendication 2 **caractérisé en ce que** l'angle et les matériaux composant la surface de contact du manchon synchronisateur (5) et la surface de contact de la bague (7) synchronisateur piston sont choisis pour limiter les glissements.

10. Dispositif de commande pour embrayage selon la revendication 2 **caractérisé en ce que** le corps de récepteur hydraulique (17) est positionné de telle sorte que la bague (7) synchronisateur piston (7) est en permanence en contact avec le manchon synchronisateur (5).

11. Dispositif de commande pour embrayage selon la revendication 5 **caractérisé en ce que** le capot (16) du manchon synchronisateur (5) comporte des moyens de montage du manchon synchronisateur (5) sur la bague intérieure de roulement (3) et le manchon synchronisateur (5) comporte des moyens (6,501) permettant le montage et la liaison en rotation avec le capot.

12. Embrayage comprenant un dispositif selon une des revendications précédentes et un piston (9) guidé axialement et de façon concentrique à l'arbre primaire d'une boîte de vitesse par une chambre hydraulique (11) montée fixe en rotation dans un carter d'embrayage du côté d'introduction de l'arbre primaire, le déplacement du piston en translation commandant un ressort de diaphragme qui agit sur une couronne mobile en translation pour plaquer une garniture contre un volant moteur; la garniture étant liée en rotation avec l'arbre primaire de la boite de vitesse.

## Claims

1. Control device for the diaphragm noses of a concentric hydraulic clutch acting on a diaphragm spring (10) comprising radial fingers whose ends form the diaphragm noses (1), **characterized in that** the device comprises a rolling bearing (20) made fixedly attached via its outer race (203) to the diaphragm noses (1), an inner race (3) being fixedly attached in rotation to a synchronizer sleeve (5) coaxial with the input shaft and mounted on the inner race (3) by means (16, 4, 501) allowing a relative radial movement of the synchronizer sleeve (5) relative to the inner race making a self-alignment of the synchronizer sleeve easier.

2. Clutch control device according to Claim 1, **characterized in that** the synchronizer sleeve (5) is made fixedly attached to the inner race (3) of the rolling bearing (20) to allow the connection to a piston synchronizer race (7) mounted fixedly in rotation on a hydraulic piston concentric with the input shaft, the piston controlling the movement in translation of the diaphragm noses.

3. Clutch control device according to one of Claims 1 or 2, **characterized in that** a preload shim (18) and a clip (19) provide the connection in rotation of the diaphragm noses (1) to a sleeve (201, 202, 203) fixedly attached to the outer race (2) of the rolling bearing (20).

4. Clutch control device according to one of Claims 2 or 3, **characterized in that** the inner race (3) comprises an extension in the form of a radial disc (301) and an axial ring (302), the latter forming a shoulder to provide the link with a cap (16) for retaining the synchronizer sleeve (5) on the inner race (3) of the rolling bearing (20).

5. Clutch control device according to one of Claims 2 to 4, **characterized in that** the means for retaining the synchronizer sleeve (5) on the inner race (3) of the rolling bearing (20) comprises a retaining cap (16) and a self-aligning shim (4) of the synchronizer sleeve pressing on a flange (501) of the synchronizer sleeve (5) and the retaining cap (16).

6. Clutch control device according to one of Claims 2 to 5, **characterized in that** an axial thrust bearing (6) is mounted and held fixedly on the synchronizer sleeve (5) on its end facing the piston (9).

7. Clutch control device according to one of Claims 2 to 6; **characterized in that** the outer race (2) of the rolling bearing (20) comprises a radial extension (201) and an axial extension (202) relative to the axis of the rolling bearing (20) forming a shoulder making it possible to install and keep the diaphragm noses (1) fixedly attached in rotation to the outer race (2) of the rolling bearing.

8. Clutch control device according to Claim 2, **characterized in that** the contact surface between the synchronizer sleeve (5) and the piston synchronizer race (7) has a conical geometry.

9. Clutch control device according to Claim 2, **characterized in that** the angle and the materials comprising the contact surface of the synchronizer sleeve (5) and the contact surface of the piston synchronizer race (7) are chosen to limit slippages.

10. Clutch control device according to Claim 2, **characterized in that** the hydraulic slave body (17) is positioned so that the piston synchronizer race (7) is permanently in contact with the synchronizer sleeve (5).

11. Clutch control device according to Claim 5, **characterized in that** the cap (16) of the synchronizer sleeve (5) comprises means for mounting the synchronizer sleeve (5) on the inner race (3) of the rolling bearing and the synchronizer sleeve (5) comprises means (6, 501) allowing the mounting and connection in rotation with the cap.

12. Clutch comprising a device according to one of the preceding claims and a piston (9) guided axially and concentrically with the input shaft of a gearbox by a hydraulic chamber (11) mounted fixedly in rotation in a clutch housing on the insertion side of the input shaft, the movement of the piston in translation controlling a diaphragm spring that acts on a movable ring in translation to press a lining against an engine flywheel; the lining being connected in rotation to the input shaft of the gearbox.

## Patentansprüche

1. Steuervorrichtung für Membrantüllen einer konzentrischen Hydraulikkupplung, die auf eine Membranfeder (10) einwirkt, die radiale Finger aufweist, deren Enden die Membrantüllen (1) bilden, **dadurch gekennzeichnet, dass** die Vorrichtung ein Radlager (20) aufweist, das über seinen Außenring (203) fest mit den Membrantüllen (1) verbunden ist, wobei ein Innenring (3) in Drehung fest mit einer Synchronisatormuffe (5) verbunden ist, die zur Primärwelle koaxial und durch Mittel (16, 4, 501) auf den Innenring (3) montiert ist, die eine radiale Verschiebung der Synchronisatormuffe (5) bezüglich des Innenrings erlauben, welche eine Selbstzentrierung der Synchronisatormuffe vereinfacht.

2. Kupplungssteuervorrichtung nach Anspruch 1, **dadurch gekennzeichnet, dass** die Synchronisatormuffe (5) fest mit dem Innenring (3) des Radlagers (20) verbunden wird, um die Verbindung mit einem Kolbensynchronisator-Ring (7) zu ermöglichen, der in Drehung fest auf einen Hydraulikkolben konzentrisch zur Primärwelle montiert ist, wobei der Kolben die Translationsverschiebung der Membrantüllen steuert.

3. Kupplungssteuervorrichtung nach einem der Ansprüche 1 bis 2, **dadurch gekennzeichnet, dass** ein Vorspannring (18) und ein Clip (19) die Drehverbindung der Membrantüllen (1) mit einer Muffe (201, 202, 203) gewährleisten, die fest mit dem Außenring (2) des Radlagers (20) verbunden ist.

4. Kupplungssteuervorrichtung nach einem der Ansprüche 2 bis 3, **dadurch gekennzeichnet, dass** der Innenring (3) eine Verlängerung in Form einer radialen Scheibe (301) und eines axialen Kranzes (302) aufweist, wobei letzterer eine Schulter bildet, um die Verbindung mit einer Haltekappe (16) der Synchronisatormuffe (5) auf dem Innenring (3) des Radlagers (20) zu gewährleisten.

5. Kupplungssteuervorrichtung nach einem der Ansprüche 2 bis 4, **dadurch gekennzeichnet, dass** das Haltemittel der Synchronisatormuffe (5) auf dem Innenring (3) des Radlagers (20) eine Haltekappe (16) und einen Selbstzentrierungsring (4) der Synchronisatormuffe aufweist, der auf einen Hals (501) der Synchronisatormuffe (5) und die Haltehaube (16) drückt.

6. Kupplungssteuervorrichtung nach einem der Ansprüche 2 bis 5, **dadurch gekennzeichnet, dass** ein axialer Anschlag (6) auf die Synchronisatormuffe (5) an ihrem Ende montiert und fest mit ihr verbunden gehalten wird, das dem Kolben (9) gegenüberliegt.

7. Kupplungssteuervorrichtung nach einem der Ansprüche 2 bis 6, **dadurch gekennzeichnet, dass** der Außenring (2) des Radlagers (20) eine radiale (201) und eine axiale Verlängerung (202) bezüglich der Achse des Radlagers (20) aufweist, die eine Schulter bilden, die es ermöglicht, die Membrantüllen (1) in Drehung fest verbunden auf den Außenring des Radlagers (2) zu montieren und zu halten.

8. Kupplungssteuervorrichtung nach Anspruch 2, **dadurch gekennzeichnet, dass** die Kontaktfläche zwischen der Synchronisatormuffe (5) und dem Kolbensynchronisator-Ring (7) von kegeliger Geometrie ist.

9. Kupplungssteuervorrichtung nach Anspruch 2, **dadurch gekennzeichnet, dass** der Winkel und die die Kontaktfläche der Synchronisatormuffe (5) und die Kontaktfläche des Kolbensynchronisator-Rings (7) bildenden Werkstoffe gewählt werden, um den Schlupf zu begrenzen.

10. Kupplungssteuervorrichtung nach Anspruch 2, **dadurch gekennzeichnet, dass** der Körper des Hydraulikempfängers (17) so positioniert ist, dass der Kolbensynchronisator-Ring (7) permanent mit der Synchronisatormuffe (5) in Kontakt steht.

11. Kupplungssteuervorrichtung nach Anspruch 5, **dadurch gekennzeichnet, dass** die Kappe (16) der Synchronisatormuffe (5) Mittel zur Montage der Synchronisatormuffe (5) auf den Radlager-Innenring (3) aufweist, und dass die Synchronisatormuffe (5) Mittel (6, 501) aufweist, die die Montage und die Drehverbindung mit der Kappe erlauben.

12. Kupplung mit einer Vorrichtung nach einem der vorhergehenden Ansprüche und mit einem Kolben (9), der axial und konzentrisch zur Primärwelle eines Schaltgetriebes durch eine Hydraulikkammer (11) geführt wird, die in Drehung fest in ein Kupplungsgehäuse auf der Einlassseite der Primärwelle montiert ist, wobei die Translationsverschiebung des Kolbens eine Membranfeder steuert, die auf einen translationsbeweglichen Kranz wirkt, um einen Kupplungsbelag gegen ein Schwungrad zu drücken, wobei der Kupplungsbelag in Drehung mit der Primärwelle des Schaltgetriebes verbunden ist.
